# EUROPÄISCHE PATENTSCHRIFT

(11) **EP 3 417 539 B1**
(45) Veröffentlichungstag und Bekanntmachung des Hinweises auf die Patenterteilung: **07.09.2022**
(21) Anmeldenummer: 16716533.1
(22) Anmeldetag: 12.04.2016
(51) Int. Cl.: H02M 7/49, H02M 7/483, H01G 4/14, H01G 4/20

(54) **STROMRICHTER**
POWER CONVERTER
CONVERTISSEUR DE PUISSANCE

(43) Veröffentlichungstag der Anmeldung: 26.12.2018
(73) Patentinhaber: Siemens Energy Global GmbH & Co. KG, 81739 München (DE)
(72) Erfinder: BÖHME, Daniel, 90480 Nürnberg (DE); EULER, Ingo, 91056 Erlangen (DE); GAMBACH, Herbert, 91080 Uttenreuth (DE); KÜBEL, Thomas, 91056 Erlangen (DE); PIERSTORF, Steffen, 90443 Nürnberg (DE); SCHMITT, Daniel, 92353 Postbauer-Heng (DE); SCHREMMER, Frank, 90768 Fürth (DE); STOLTZE, Torsten, 91074 Herzogenaurach (DE); WAHLE, Marcus, 90766 Fürth (DE)
(86) Internationale Anmeldenummer: PCT/EP2016/058008
(87) Internationale Veröffentlichungsnummer: WO 2017/178039

(56) Entgegenhaltungen:
- EP-A2- 1 790 686
- WO-A1-2012/134452
- WO-A2-2006/124670
- DE-A1-102013 214 693
- US-A1- 2008 123 250

## Beschreibung

Die Erfindung betrifft einen Stromrichter mit einer Reihenschaltung aus einer Vielzahl von Modulen.

Stromrichter (power converter) sind leistungselektronische Schaltungen zum Umwandeln von elektrischer Energie. Mit Stromrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannungshöhe umgewandelt werden. Stromrichter können eine Vielzahl von gleichartigen Modulen (die auch als Submodule bezeichnet werden) aufweisen, welche elektrisch in Reihe geschaltet sind. Diese Module weisen jeweils mindestens zwei elektronische Schaltelemente und einen elektrischen Energiespeicher auf. Solche Stromrichter werden als modulare Multilevelstromrichter bezeichnet und gehören zu den VSC-Stromrichtern (VSC = voltage sourced converter). Durch die elektrische Reihenschaltung der Module lassen sich hohe Ausgangsspannungen erreichen. Die Stromrichter sind einfach an unterschiedliche Spannungen anpassbar (skalierbar) und eine gewünschte Ausgangsspannung kann relativ genau erzeugt werden. Diese Stromrichter werden oftmals im Hochspannungsbereich eingesetzt, beispielsweise als Stromrichter bei Hochspannungs-Gleichstrom-Übertragungsanlagen oder als Blindleistungskompensatoren bei flexiblen Drehstromübertragungssystemen.

Solche Stromrichter weisen oftmals eine beträchtliche Größe auf. Abhängig vom Einsatzgebiet können die Kosten für den Grund und Boden bzw. für den umbauten Raum der Stromrichter erheblich sein. Insbesondere bei Offshore-Anlagen ist umbauter Raum teuer. Dazu kommen ggf. noch Kosten für die Klimatisierung, die auch mit der Größe der Stromrichter ansteigen können.

Aus der Offenlegungsschrift DE 10 2013 214 693 A1 ist eine Anordnung zur Kompensation von Blindleistung und Wirkleistung in einem Hochspannungsnetz bekannt. Diese Anordnung weist einen Stromrichter mit einer Vielzahl von gleichartigen Submodulen auf. Die Submodule beinhalten jeweils mindestens zwei elektronische Schaltelemente und einen elektrischen Energiespeicher.

Die internationale Patentanmeldung WO 2012/134452 A1 offenbart einen Kondensator mit einem Dielektrikum, das ein Polymer und Nanopartikel beinhaltet.

Der Erfindung liegt die Aufgabe zugrunde, einen Stromrichter anzugeben, der eine vergleichsweise geringe Größe hat.

Diese Aufgabe wird erfindungsgemäß gelöst durch einen Stromrichter nach dem unabhängigen Patentanspruch. Vorteilhafte Ausführungsformen des Stromrichters sind in den abhängigen Patentansprüchen angegeben.

Offenbart wird ein Stromrichter mit einer Reihenschaltung aus einer Vielzahl von Modulen, welche jeweils mindestens zwei elektronische Schaltelemente und einen elektrischen Energiespeicher aufweisen, wobei der elektrische Energiespeicher ein Kondensator ist, dessen Dielektrikum eine Folie aufweist, wobei die Folie ein Polymer aufweist, das mit keramischen Nanopartikeln versehen ist. Dabei ist vorteilhaft, dass der Kondensator als Dielektrikum eine Polymerfolie aufweist, wobei die Polymerfolie mit keramischen Nanopartikeln versehen ist. Die Nanopartikel sind dabei in dem Polymer verteilt. Ein derartiges Dielektrikum weist (im Vergleich zu einem Dielektrikum ohne keramische Nanopartikel) eine größere relative Permittivität εᵣ auf (Dielektrizitätszahl εᵣ). Dadurch hat ein Kondensator mit einem derartigen Dielektrikum eine größere elektrische Kapazität im Vergleich zu einem gleich großen Kondensator mit einem Dielektrikum ohne keramische Nanopartikel (nanopartikelfreies Dielektrikum). Dadurch weist ein solcher Kondensator (verglichen mit einem nanopartikelfreien Kondensator gleicher elektrischer Kapazität) eine erheblich geringere Größe auf. Daher weist auch der Stromrichter mit diesen Kondensatoren eine vergleichsweise geringe Größe auf. Dadurch lassen sich derartige Stromrichter platzsparend und damit auch kostensparend herstellen und betreiben.

Der Stromrichter kann so ausgestaltet sein, dass die Nanopartikel einen Durchmesser kleiner als 50 nm aufweisen. Bei Nanopartikeln mit einem Durchmesser kleiner als 50 nm tritt eine größere relative Permittivität εᵣ des Dielektrikums auf als bei Nanopartikeln mit einem Durchmesser größer als 50 nm. Dadurch können mit Nanopartikeln mit einem Durchmesser kleiner als 50 nm besonders kleine Kondensatoren hergestellt werden.

Der Stromrichter kann auch so ausgestaltet sein, dass die Nanopartikel einen Durchmesser zwischen 10 und 30 nm, insbesondere einen Durchmesser von etwa 20 nm, aufweisen. Bei Nanopartikeln mit einem Durchmesser zwischen 10 und 30 nm, insbesondere bei Nanopartikeln mit einem Durchmesser von etwa 20 nm, lassen sich Dielektrika herstellen, die eine besonders hohe relative Permittivität εᵣ aufweisen. Daher sind derartige Nanopartikel besonders vorteilhaft, um Kondensatoren mit geringer Größe bei hoher elektrischer Kapazität herzustellen.

Der Stromrichter ist so ausgestaltet, dass die Oberfläche der Nanopartikel mit einem Silan versehen ist. Durch Versehen der Oberfläche der Nanopartikel mit einem Silan lassen sich besonders große relative Permittivitätswerte εᵣ erzielen. Beispiele für Silane sind Trichlorsilan oder Dimethylsilan. Mit anderen Worten ist die Oberfläche der Nanopartikel mit dem Silan belegt.

Der Stromrichter ist auch so ausgestaltet, dass zwischen den Nanopartikeln und dem die Nanopartikel umgebenden Polymer eine elektrisch polarisierbare Grenzschicht ausgebildet ist, deren Dicke in etwa dem Durchmesser der Nanopartikel entspricht. Insbesondere bei mit einem Silan versehenen Oberflächen der Nanopartikel entsteht zwischen den Nanopartikeln und dem die Nanopartikel umgebenen Polymer die elektrisch polarisierbare Grenzschicht, wobei die Dicke der Grenzschicht in etwa dem Durchmesser der Nanopartikel entspricht. Als besonders vorteilhaft hat sich herausgestellt, wenn der Durchmesser der Nanopartikel etwa 20 nm beträgt und die Grenzschicht ebenfalls eine Dicke von etwa 20 nm aufweist. Mit einem derartig ausgebildeten Dielektrikum lassen sich besonders große relative Permittitvitätswerte εᵣ erreichen.

Ein weiterer Vorteil der keramischen Nanopartikel, insbesondere der keramischen Nanopartikel, die mit dem Silan versehen sind und um die herum sich die elektrisch polarisierbare Grenzschicht ausgebildet hat, liegt darin, dass die Spannungsfestigkeit des Dielektrikums vergrößert ist. Die Spannungsfestigkeit des Dielektrikums ist vergrößert, weil die Nanopartikel mit der Grenzschicht als Fänger freier Ladungen wirken. Dadurch wird das elektrische Durchbruchsverhalten des Dielektrikums verbessert und das Dielektrikum kann bei höheren elektrischen Feldstärken eingesetzt werden.

Der Stromrichter kann auch so ausgebildet sein, dass die Nanopartikel aus einem oxidkeramischen Stoff bestehen. Derartige Nanopartikel lassen sich kostengünstig herstellen bzw. sind kostengünstig verfügbar. Insbesondere können die Nanopartikel aus einem Titanat oder aus einem Oxid bestehen. Beispiele für Titanate sind Bariumtitanat BaTi03 oder Barium-Strontium-Titanat; Beispiele für Oxide sind Titandioxid Ti02, Siliziumdioxid Si02 oder Aluminiumoxid Al2O3.

Der Stromrichter kann so ausgestaltet sein, dass das Polymer Polypropylen oder ein Cyclo-Olefin-Copolymere (COC) ist. Polyproplen ist ein kostengünstig verfügbarer Stoff, welcher sich gut verarbeiten lässt und einen kleinen dielektrischen Verlustfaktor tan δ₀ aufweist. Cyclo-Olefin-Copolymere weisen einen noch geringeren dielektrischen Verlustfaktor tan δ₀ auf, der beispielsweise um eine Zehnerpotenz geringer sein kann als der dielektrischen Verlustfaktor von Polypropylen.

Daher ist es besonders vorteilhaft, als Polymer ein Cyclo-Olefin-Copolymer einzusetzen, weil dadurch die im Kondensator auftretende Verlustwäre erheblich verringert werden kann. Dadurch sinkt beispielsweise der Aufwand für die Klimatisierung des Stromrichters, was sich positiv auf die Betriebskosten des Stromrichters auswirkt. Außerdem erhöht sich durch die geringere Verlustwärme in den Kondensatoren die Lebensdauer der Kondensatoren. Aber auch ein Kondensator mit dem Polymer Polypropylen als Dielektrikum weist eine attraktiv geringe Verlustwärme beim Betrieb auf.

Offenbart wird weiterhin eine Hochspannungs-Gleichstrom-Übertragungsanlage mit einem derartigen Stromrichter.

Offenbart wird weiterhin eine Blindleistungskompensationsanlage mit einem derartigen Stromrichter.

Eine derartige Hochspannungs-Gleichstrom-Übertragungsanlage beziehungsweise eine derartige Blindleistungskompensationsanlage weist ähnliche Vorteile auf, wie sie oben im Zusammenhang mit dem Stromrichter erläutert worden sind. Insbesondere lassen sich die Hochspannungs-Gleichstrom-Übertragungsanlage und die Blindleistungskompensations-Anlage mit einer vergleichsweise geringen Baugröße realisieren und es treten relativ geringe Verluste in den Kondensatoren dieser Anlagen auf.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines modularen Multilevelstromrichters, in
- Figur 2: ein Ausführungsbeispiel eines Moduls des Multilevelstromrichters, in
- Figur 3: ein weiteres Ausführungsbeispiel eines Moduls, in
- Figur 4: ein Ausführungsbeispiel einer HochspannungsGleichstrom-Übertragungsanlage, in
- Figur 5: ein Ausführungsbeispiel einer Blindleistungskompensationsanlage, in
- Figur 6: eine schematische Darstellung eines Ausführungsbeispiels eines Kondensators, in
- Figur 7: eine weitere schematische Darstellung eines Ausführungsbeispiels eines Kondensators und in
- Figur 8: ein vergrößerter Ausschnitt aus der Darstellung der Figur 6 dargestellt.

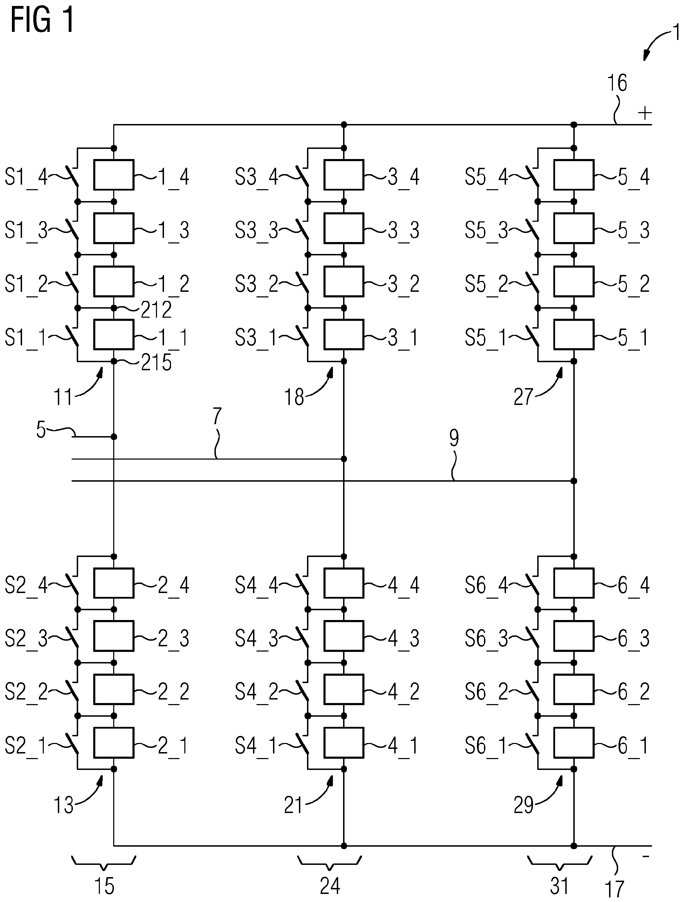

In Figur 1 ist ein Stromrichter 1 in Form eines modularen Multilevelstromrichters 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Modulen (1_1, 1_2, 1_3, 1_4; 2_1 ... 2_4; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig 4 Module (Stromrichter-Module) auf. Die Anzahl der (mittels ihrer galvanischen Stromanschlüsse) elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein.

Jedem Modul ist ein Schalter (Überbrückungsschalter, Bypassschalter) zugeordnet, der das Modul (bei einem Defekt des Moduls) überbrücken (kurzschließen) kann. Beispielsweise ist dem ersten Modul 1_1 ein erster Schalter S1_1 zugeordnet. Der erste Schalter S1_1 wird bei Auftreten eines Defekts an dem ersten Modul 1_1 von einer modulinternen Schalter-Ansteuereinrichtung angesteuert, daraufhin schließt der erste Schalter S1_1; das heißt, der erste Schalter S1_1 geht von dem geöffneten Schaltzustand in den geschlossenen Schaltzustand über. Jedes der Module des Stromrichters 1 ist mit einem Schalter versehen.

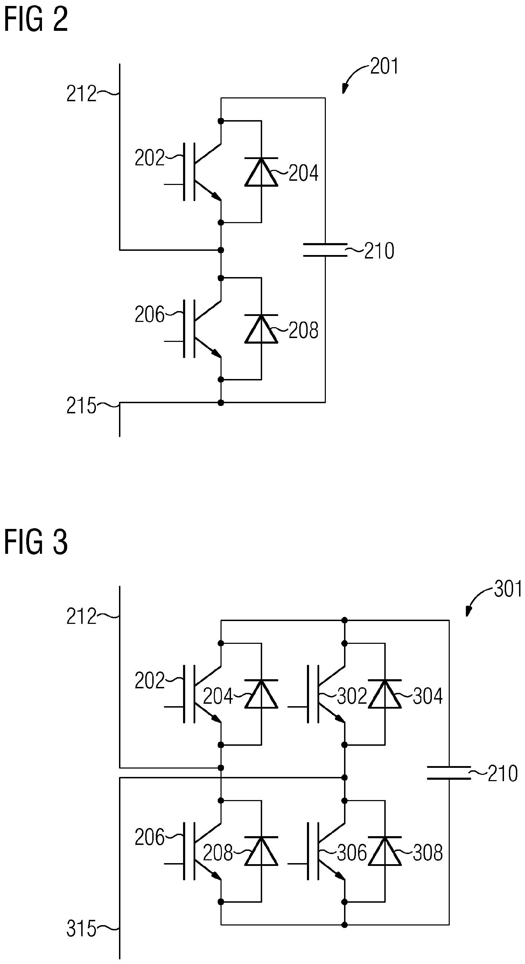

In Figur 2 ist beispielhaft der prinzipielle Aufbau eines Moduls 201 dargestellt. Dabei kann es sich beispielsweise um das Modul 1_1 des ersten Phasenmodulzweigs 11 (oder auch um eines der anderen in Figur 1 dargestellten Module) handeln. Das Modul ist als ein Halbbrücken-Modul 201 ausgestaltet. Das Modul 201 weist ein erstes ein- und abschaltbares Halbleiterventil 202 mit einer ersten antiparallel geschalteten Diode 204 auf. Weiterhin weist das Modul 201 ein zweites ein- und abschaltbares Halbleiterventil 206 mit einer zweiten antiparallel geschalteten Diode 208 sowie einen elektrischen Energiespeicher 210 in Form eines Kondensators 210 auf. Der Kondensator 210 ist ein unipolarer Kondensator 210 (unipolarer Speicherkondensator 210).

Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 kann jeweils als ein IGBT (insulated-gate bipolar transistor) ausgestaltet sein. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202 und 206 ist ein erster galvanischer Modulanschluss 212 angeordnet. An dem Anschluss des zweiten Halbleiterventils 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 (zum Beispiel durch eine modulinterne elektronische Ansteuerschaltung) kann erreicht werden, dass zwischen dem ersten galvanischen Modulanschluss 212 und dem zweiten galvanischen Modulanschluss 215 entweder die Spannung des Energiespeichers 210 ausgegeben wird oder keine Spannung ausgegeben wird (das heißt eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 3 ist ein weiteres Ausführungsbeispiel eines Moduls 301 dargestellt. Bei diesem Modul 301 kann es sich beispielsweise um das Modul 1_2 (oder auch um eines der anderen in Figur 1 dargestellten Module) handeln. Neben dem bereits aus Figur 2 bekannten ersten Halbleiterventil 202, zweiten Halbleiterventil 206, erster Diode 204, zweiter Diode 208 und Energiespeicher 210 (Kondensator 210) weist das in Figur 3 dargestellte Modul 301 ein drittes ein- und abschaltbares Halbleiterventil 302 mit einer antiparallel geschalteten dritten Diode 304 sowie ein viertes ein- und abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 kann jeweils als ein IGBT ausgestaltet sein. Im Unterschied zur Schaltung der Figur 2 ist der zweite galvanische Modulanschluss 315 nicht mit dem zweiten Halbleiterventil 206 elektrisch verbunden, sondern mit einem Mittelpunkt einer elektrischen Reihenschaltung aus dem dritten Halbleiterventil 302 und dem vierten Halbleiterventil 306.

Das Modul 301 der Figur 3 ist ein sogenanntes Vollbrücken-Modul 301. Dieses Vollbrücken-Modul 301 zeichnet sich dadurch aus, dass bei entsprechender Ansteuerung der vier Halbleiterventile zwischen dem ersten galvanischen Modulanschluss 212 und dem zweiten galvanischen Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 1 kann entweder nur Halbbrücken-Module 201, nur Vollbrücken-Module 301 oder auch Halbbrücken-Module 201 und Vollbrücken-Module 301 aufweisen. Anstelle des beschriebenen Halbbrücken-Moduls oder des beschriebenen Vollbrücken-Moduls kann es sich bei dem Modul auch um ein anderes Modul handeln, beispielsweise um ein Mehrlevel-Modul, das mehrere Kondensatoren als Energiespeicher aufweist, wobei die Spannungen der Kondensatoren unterschiedlich kombiniert werden können.

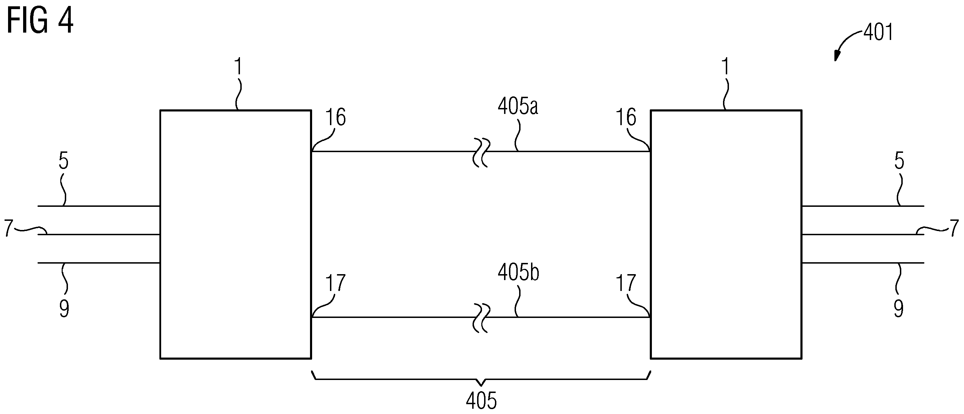

In Figur 4 ist schematisch ein Ausführungsbeispiel einer Hochspannungs-Gleichstrom-Übertragungsanlage 401 dargestellt. Diese Hochspannungs-Gleichstrom-Übertragungsanlage 401 weist zwei Stromrichter 1 (gemäß der Figur 1) auf. Diese beiden Stromrichter 1 sind gleichspannungsseitig über eine Hochspannungs-Gleichstrom-Verbindung 405 elektrisch miteinander verbunden. Dabei sind die beiden positiven Gleichspannungsanschlüsse 16 der Stromrichter 1 mittels einer ersten Hochspannungs-Gleichstrom-Leitung 405a elektrisch miteinander verbunden; die beiden negativen Gleichspannungsanschlüsse 17 der beiden Stromrichter 1 sind mittels einer zweiten Hochspannungs-Gleichstrom-Leitung 405b elektrisch miteinander verbunden. Mittels einer derartigen Hochspannungs-Gleichstrom-Übertragungsanlage 401 kann elektrische Energie über weite Entfernungen übertragen werden; die Hochspannungs-Gleichstrom-Verbindung 405 weist dann eine entsprechende Länge auf.

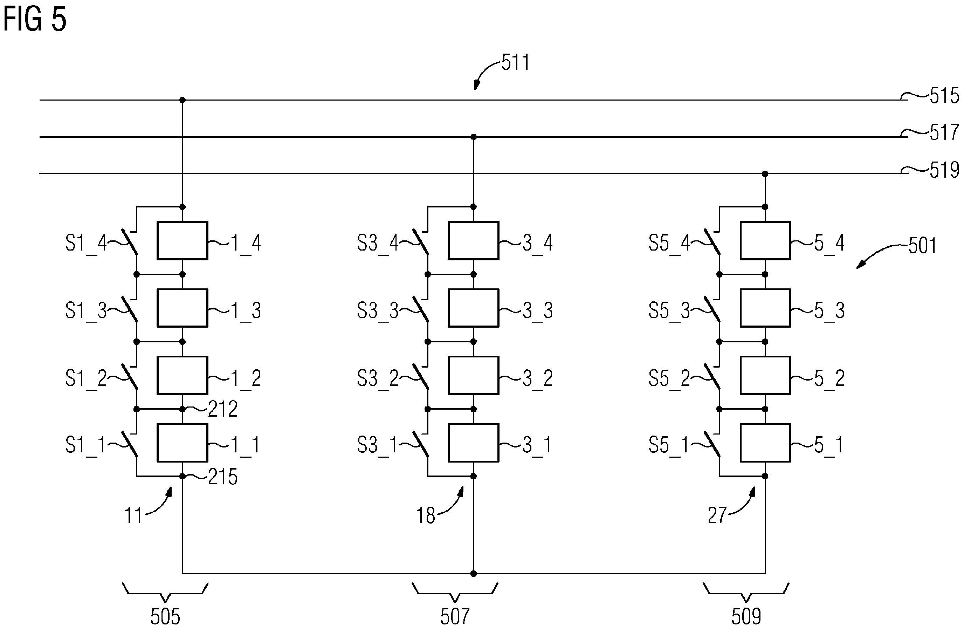

In Figur 5 ist ein Ausführungsbeispiel eines Stromrichters 501 dargestellt, welcher als ein Blindleistungskompensator 501 dient. Dieser Stromrichter 501 weist lediglich die drei Phasenmodulzweige 11, 18 und 27 auf, welche drei Phasenmodule 505, 507 und 509 des Stromrichters bilden. Die Anzahl der Phasenmodule 505, 507 und 509 entspricht der Anzahl der Phasen eines Wechselspannungsnetzes 511, an das der Stromrichter 501 angeschlossen ist.

Die drei Phasenmodulzweige 11, 18 und 27 sind sternförmig miteinander verbunden. Das dem Sternpunkt entgegengesetzte Ende der drei Phasenmodulzweige ist mit jeweils einer Phasenleitung 515, 517 und 519 des dreiphasigen Wechselspannungsnetzes 511 elektrisch verbunden. (Die drei Phasenmodule 505, 507 und 509 können in einem anderen Ausführungsbeispiel anstelle in Sternschaltung auch in Dreieckschaltung geschaltet sein.) Der Stromrichter 501 kann das Wechselspannungsnetz 511 mit Blindleistung versorgen oder Blindleistung aus dem Wechselspannungsnetz 511 entnehmen.

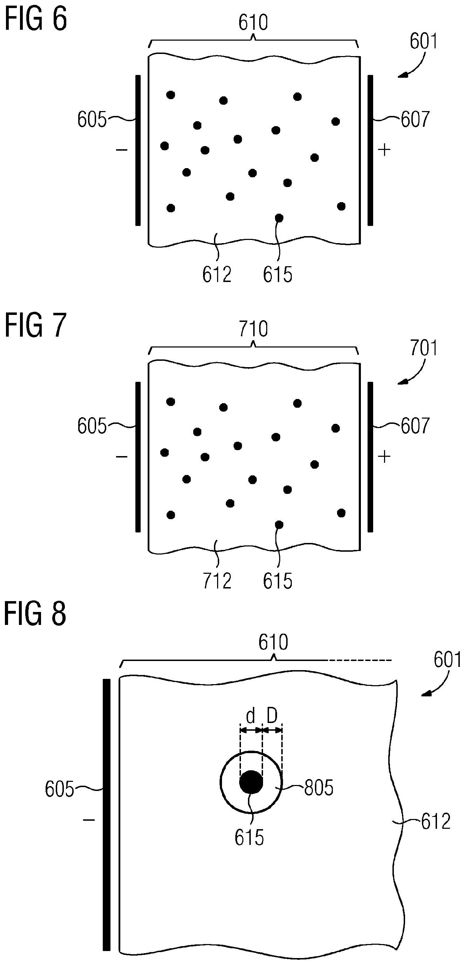

Figur 6 zeigt ein Ausführungsbeispiel eines Kondensators 601 in einer schematischen Schnittdarstellung. Dieser elektrische Kondensator 601 ist beispielsweise der Kondensator 210 der Figuren 2 oder 3. Der Kondensator 601 weist eine erste Elektrode 605 und eine zweite Elektrode 607 auf. Die erste Elektrode 605 ist eine negative elektrische Elektrode 605; die zweite Elektrode 607 ist eine positive elektrische Elektrode 607. Die erste Elektrode 605 und die zweite Elektrode 607 werden durch einen elektrisch isolierenden Stoff getrennt: durch das Dielektrikum 610. Das Dielektrikum 610 stellt eine Folie 610 dar, von der in Figur 6 lediglich ein Ausschnitt dargestellt ist. Von der ersten Elektrode 605 und der zweiten Elektrode 607 ist ebenfalls jeweils nur ein Ausschnitt dargestellt.

Das Dielektrikum 610 besteht aus einem Polymer 612, welches mit Nanopartikeln 615 versehen ist. Die Nanopartikel 615 sind dabei in dem Polymer 612 im Wesentlichen gleich verteilt. Weiterhin kann das Dielektrikum 610 noch andere Stoffe aufweisen (beispielsweise zur Verbesserung der Verarbeitbarkeit oder zur Verbesserung der mechanischen Eigenschaften), auf diese Stoffe kommt es aber im Rahmen der vorliegenden Patentanmeldung nicht weiter an. Im Ausführungsbeispiel der Figur 6 ist das Polymer als Polypropylen 612 ausgestaltet.

Die Nanopartikel 615 bestehen vorzugsweise aus einem oxidkeramischen Stoff, beispielsweise aus einem Titanat oder aus einem Oxid. Beispiele für Titanate sind Bariumtitanat BaTi03 oder Barium-Strontium-Titanat; Beispiele für Oxide sind Titandioxid Ti02, Siliziumdioxid Si02 oder Aluminiumoxid Al2O3.

Der Kondensator 601 ist vorzugsweise ein Folienkondensator 601, das heißt, die erste Elektrode 605, die zweite Elektrode 607 und das Dielektrikum 610 sind jeweils als Streifen ausgestaltet, welche aufgerollt sind und einen Folienwickel bilden.

In Figur 7 ist ein weiteres Ausführungsbeispiel für einen Kondensator 701 dargestellt. Dieser Kondensator 701 unterscheidet sich von dem Kondensator 601 der Figur 6 dadurch, dass das Dielektrikum 710 anstelle des Polypropylens 612 ein Cyclo-Olefin-Copolymere 712 (COC) aufweist. In dem Cyclo-Olefin-Copolymere 712 sind die Nanopartikel 615 angeordnet. Der Kondensator 701 ist ebenfalls vorzugsweise ein Folienkondensator 701.

Die Verwendung von Cyclo-Olefin-Copolymere führt aufgrund des geringeren materialspezifischen Verlustfaktors tan δ₀ von Cyclo-Olefin-Copolymere (im Vergleich zu Polypropylen) zu geringen elektrischen Verlusten in den Kondensatoren, wodurch sich geringere dielektrische Verluste beim Betrieb des Stromrichters ergeben. Dies ist ein erheblicher Vorteil gegenüber anderen Polymeren.

In Figur 8 ist schematisch ein vergrößerter Ausschnitt aus dem Kondensator 601 der Figur 6 dargestellt. Neben der ersten Elektrode 605 ist ein Ausschnitt aus dem Dielektrikum 610 mit einem einzigen Nanopartikel 615 dargestellt. Die Oberfläche dieses Nanopartikels 615 ist mit einem Silan versehen, beispielsweise mit Trichlorsilan oder mit Dimethylsilan. Dadurch bildet sich um das Nanopartikel 615 herum eine Grenzschicht 805 (silanhaltige Grenzschicht 805) zwischen dem Nanopartikel 615 und dem das Nanopartikel 615 umgebenden Polymer 612 (hier: zwischen dem Nanopartikel 615 und dem das Nanopartikel 615 umgebenden Polypropylen 612). Diese Grenzschicht 805 ist elektrisch polarisierbar. Die Grenzschicht 805 weist eine Dicke D auf, die in etwa dem Durchmesser d des Nanopartikels 615 entspricht. Beispielsweise kann die Dicke D der Grenzschicht ungefähr 20 nm sein, wobei der Durchmesser d des Nanopartikels 605 auch ungefähr 20 nm ist. Allgemein ist die Dicke der Grenzschicht beispielsweise abhängig von den Moleküleigenschaften des Silans. Unterschiedliche Silane führen zu unterschiedlich dicken Grenzschichten. Durch Wahl des Silans kann also die Dicke der Grenzschicht beeinflusst werden. Auch der Stoff der Nanopartikel kann die Dicke der Grenzschicht beeinflussen. Also kann auch durch die Wahl der Nanopartikel die Dicke der Grenzschicht beeinflusst werden.

Bei Nanopartikeln 615 mit einem Durchmesser d kleiner als 50 nm tritt vorteilhafterweise ein erhöhter relativer Permittivitätswert εᵣ des Dielektrikums auf. Besonders vorteilhaft ist es, wenn die Nanopartikel einen Durchmesser zwischen 10 und 30 nm aufweisen, insbesondere einen Durchmesser von etwa 20 nm. Dann tritt ein besonders großer relativer Permittivitätswert εᵣ des Dielektrikums auf. Dadurch lassen sich (bei gleicher elektrischer Kapazität) besonders kleine Kondensatoren realisieren.

Eine kleine Bauform der Kondensatoren ist insbesondere deshalb von Vorteil, weil die Kondensatoren in den Modulen zu den räumlich größten Einzelkomponenten der Stromrichter gehören. Insbesondere wenn Grund und Boden oder der von den Stromrichtern genutzte Raum teuer ist (wie beispielsweise bei Offshore-Anlagen für zum Beispiel auf See installierte Windkraftanlagen) lassen sich mit einer Verkleinerung der Größe der Stromrichter bedeutende finanzielle Vorteile erzielen. Weiterhin ist es sehr vorteilhaft, wenn die in den Kondensatoren auftretende Verlustwärme reduziert werden kann, weil dadurch die Kosten für die Klimatisierung oder die Kosten für die Wärmeabfuhr gering gehalten werden können.

Es wurde ein Stromrichter beschrieben, welcher in den Modulen jeweils mindestens einen Kondensator aufweist, wobei dieser Kondensator als Dielektrikum eine Polymerfolie aufweist, die mit keramischen Nanopartikeln versehen ist. Durch die keramischen Nanopartikel vergrößert sich die relative Permittivität εᵣ des Dielektrikums, wodurch sich diese Kondensatoren (bei gleichbleibender elektrischer Kapazität) besonders klein realisieren lassen. Daher lässt sich auch der Stromrichter besonders klein realisieren, dadurch kann ein derartiger Stromrichter besonders kostengünstig hergestellt und betrieben werden.

## Patentansprüche

1. Stromrichter (1) mit einer Reihenschaltung aus einer Vielzahl von Modulen (1_1, 1_2, 1_3, ...), welche jeweils mindestens zwei elektronische Schaltelemente (202, 206) und einen elektrischen Energiespeicher (210) aufweisen, wobei der elektrische Energiespeicher ein Kondensator (601) ist, dessen Dielektrikum eine Folie (610) aufweist, wobei die Folie ein Polymer (612) aufweist, das mit keramischen Nanopartikeln (615) versehen ist,
- die Oberfläche der Nanopartikel (615) derart mit einem Silan (805) versehen ist, dass zwischen den Nanopartikeln (615) und dem die Nanopartikel umgebenden Polymer (612) eine silanhaltige, elektrisch polarisierbare Grenzschicht (805) ausgebildet ist, deren Dicke (D) in etwa dem Durchmesser (d) der Nanopartikel (615) entspricht.

2. Stromrichter nach Anspruch 1,
**dadurch gekennzeichnet, dass**
- die Nanopartikel (615) einen Durchmesser kleiner als 50 nm aufweisen.

3. Stromrichter nach Anspruch 1 oder 2,
**dadurch gekennzeichnet, dass**
- die Nanopartikel (615) einen Durchmesser zwischen 10 und 30 nm, insbesondere einen Durchmesser von etwa 20 nm, aufweisen.

4. Stromrichter nach einem der vorhergehenden Ansprüche,
**dadurch gekennzeichnet, dass**
- die Nanopartikel (615) aus einem oxidkeramischen Stoff bestehen.

5. Stromrichter nach einem der vorhergehenden Ansprüche,
d**adurch gekennzeichnet**, dass
- das Polymer Polypropylen (612) oder ein Cyclo-Olefin-Copolymere (712) ist.

6. Hochspannungs-Gleichstrom-Übertragungsanlage (401) mit einem Stromrichter (1) nach einem der Ansprüche 1 bis 5.

7. Blindleistungskompensationsanlage (501) mit einem Stromrichter (1) nach einem der Ansprüche 1 bis 5.

## Claims

1. Power converter (1) having a series circuit composed of a plurality of modules (1_1, 1_2, 1_3, ...), each comprising at least two electronic switching elements (202, 206) and an electrical energy store (210), the electrical energy store being a capacitor (601), the dielectric of which comprises a film (610), the film comprising a polymer (612) provided with ceramic nanoparticles (615),
- the surface of the nanoparticles (615) is provided with a silane (805) in such a way that a silane-containing, electrically polarizable boundary layer (805) is formed between the nanoparticles (615) and the polymer (612) surrounding the nanoparticles, the thickness (D) of said boundary layer approximately corresponding to the diameter (d) of the nanoparticles (615).

2. Power converter according to Claim 1,
**characterized in that**
- the nanoparticles (615) have a diameter of less than 50 nm.

3. Power converter according to Claim 1 or 2,
**characterized in that**
- the nanoparticles (615) have a diameter of between 10 and 30 nm, in particular a diameter of approximately 20 nm.

4. Power converter according to any of the preceding claims, **characterized in that**
- the nanoparticles (615) consist of an oxide-ceramic substance.

5. Power converter according to any of the preceding claims, **characterized in that**
- the polymer is polypropylene (612) or a cycloolefin copolymer (712).

6. High-voltage direct current transmission system (401) comprising a power converter (1) according to any of Claims 1 to 5.

7. Reactive power compensation system (501) comprising a power converter (1) according to any of Claims 1 to 5.

## Revendications

1. Convertisseur (1) de puissance comprenant un circuit série composé d'une pluralité de modules (1_1, 1_2, 1_3, ...), qui ont chacun au moins deux éléments (202, 206) électroniques de coupure et un accumulateur (210) d'énergie électrique, dans lequel l'accumulateur d'énergie électrique est un condensateur (601), dont le diélectrique a une feuille (610), dans lequel la feuille a un polymère (612), qui est pourvu de nanoparticules (615) en céramique,
- la surface des nanoparticules (615) est pourvu d'un silane (805), de manière à constituer, entre les nanoparticules (615) et le polymère (612), entourant les nanoparticules, une couche (805) limite polarisable électriquement silanée, dont l'épaisseur (D) correspond à peu près au diamètre (d) des nanoparticules (615).

2. Convertisseur de puissance suivant la revendication 1, **caractérisé en ce que**
- les nanoparticules (615) ont un diamètre plus petit que 50 nm.

3. Convertisseur de puissance suivant la revendication 1 ou 2, **caractérisé en ce que**
- les nanoparticules (615) ont un diamètre compris entre 10 et 30 nm, en ayant notamment un diamètre d'environ 20 nm.

4. Convertisseur de puissance suivant l'une des revendications précédentes,
**caractérisé en ce que**
- les nanoparticules (615) sont en une matière céramique à base d'oxyde.

5. Convertisseur de puissance suivant l'une des revendications précédentes,
**caractérisé en ce que**
- le polymère est du polypropylène (612) ou un copolymère (712) cyclo-oléfinique.

6. Installation (401) de transport de courant continu sous haute tension comprenant un convertisseur (1) de puissance suivant l'une des revendications 1 à 5.

7. Installation (501) de compensation de puissance réactive comprenant un convertisseur (1) de puissance suivant l'une des revendications 1 à 5.
